# EUROPÄISCHE PATENTSCHRIFT

(11) **EP 3 331 734 B1**
(45) Veröffentlichungstag und Bekanntmachung des Hinweises auf die Patenterteilung: **04.09.2019**
(21) Anmeldenummer: 16730377.5
(22) Anmeldetag: 17.06.2016
(51) Int. Cl.: B60T 8/17, B60T 13/66, B60L 7/18, B60L 7/26

(54) **BREMSSYSTEM FÜR EIN SCHIENENFAHRZEUG**
BRAKING SYSTEM FOR A RAIL VEHICLE
SYSTÈME DE FREIN POUR UN VÉHICULE FERROVIAIRE

(30) Priorität: 23.06.2015 DE 102015110053
(43) Veröffentlichungstag der Anmeldung: 13.06.2018
(73) Patentinhaber: KNORR-BREMSE Systeme für Schienenfahrzeuge GmbH, 80809 München (DE)
(72) Erfinder: MÜLLER, Claus, 82515 Wolfratshausen (DE); TOMBERGER, Christoph, 80469 München (DE); FRIESEN, Ulf, 85579 Neubiberg (DE); VOLLMER, Achim, 82024 Taufkirchen (DE)
(86) Internationale Anmeldenummer: PCT/EP2016/064055
(87) Internationale Veröffentlichungsnummer: WO 2016/207078

(56) Entgegenhaltungen:
- EP-A1- 0 932 033
- WO-A2-2013/034731
- DE-A1- 19 510 755
- DE-A1- 19 755 112
- DE-A1- 19 810 213
- DE-A1-102005 046 017
- DE-A1-102008 034 654
- DE-A1-102012 219 984
- US-A1- 2007 219 682

## Beschreibung

Die Erfindung betrifft ein Bremssystem für ein Schienenfahrzeug sowie eine Einrichtung zur Ermittlung der auf das Fahrzeug wirkenden Bremskraft.

### Stand der Technik

Schienenfahrzeuge müssen im Verkehr vorgegebene Bremswege einhalten und insbesondere an ihnen zuvor signalisierten Punkten zum Stehen kommen. Die Bremsung eines Schienenfahrzeugs erfolgt nach genau definierten Kriterien, u.a. Verzögerungskennlinien, deren Einhaltung relevant für die Sicherstellung des wirtschaftlichen und sicheren Betriebes der Schienenfahrzeuge ist. An jeder Bremsung eines modernen Schienenfahrzeugs sind verschiedene Bremstypen beteiligt (Reibungsbremse, elektrodynamische Bremse, Magnetschienenbremse, Wirbelstrombremse). Jede dieser Bremsen hat ihre spezifischen Vorzüge, beispielsweise einen Geschwindigkeits- oder Leistungsbereich, in dem sie am effektivsten oder in Bezug auf Verschleiß am kostengünstigsten wirkt. Jeder Bremstyp weist dabei spezifische Toleranzen und Ungenauigkeiten in der Umsetzung der Bremskraft auf, was zu ungewünschten Variationen der erreichten Bremskraft im Verlauf des Bremsvorganges führt.

Die exakte Dosierung einer Bremsung würde eine Rückkopplung der tatsächlich ausgeübten Bremskraft erfordern, indem diese beispielsweise dem Fahrzeugführer über eine Anzeige im Führerstand mitgeteilt oder direkt einer elektronischen Regelschleife für die Bremskraft zugeführt wird. Speziell bei gleichzeitigem Zusammenwirken mehrerer Bremstypen lässt sich jedoch die von jeder einzelnen Bremse ausgeübte Bremskraft nicht direkt messen, sondern nur über einen Umweg mit entsprechenden Ungenauigkeiten, etwa über die aufgenommene elektrische Leistung, über einen Bremszylinderdruck oder über Materialdehnungen. Der physikalische Zusammenhang zwischen diesen Größen und der Bremskraft ist häufig nichtlinear und unterliegt zudem systematischen und zufälligen Schwankungen. Allein für die pneumatische Reibungsbremse ist aus der DE 10 2012 219 984 A1 eine Lösung für die direkte Erfassung der ausgeübten Bremskraft bekannt.

Aus der DE 10 2011 052 545 A1 ist bekannt, Signale, die repräsentativ für die Längsverzögerung des Fahrzeugs sind, auszuwerten und über eine Regelschleife einen vorgegebenen Wert für die Längsverzögerung anzustreben. Nachteilig liefert diese Auswertung nicht die tatsächlich wirksame Bremskraft. Die Regelung auf einen Sollwert für die Längsverzögerung hat zudem die Nebenwirkung, dass in der Steigung die mögliche Verzögerung nicht ausgeschöpft wird und dass im Gefälle die Bremse überbeansprucht wird.

DE 10 2012 219984 A1 offenbart ein Bremssystem für ein Schienenfahrzeug, mit einer Sollwertregelungseinrichtung, die einen Sollwert einer Verzögerungsgröße auf einen Ausgangs-Sollwert regelt.

### Aufgabe und Lösung

Es ist daher die Aufgabe der Erfindung, eine Vorrichtung zur Ermittlung der auf ein Fahrzeug wirkenden Bremskraft zur Verfügung zu stellen. Es ist eine weitere Aufgabe der Erfindung, ein Bremssystem für ein Fahrzeug zur Verfügung zu stellen, mit dem das Fahrzeug zielgenauer auf einer definierten Strecke oder an einem definierten Ort zum Halt gebracht werden kann als nach dem bisherigen Stand der Technik.

Diese Aufgaben werden erfindungsgemäß gelöst durch ein Bremssystem gemäß Hauptanspruch.

Weitere vorteilhafte Ausgestaltungen ergeben sich aus den darauf rückbezogenen Unteransprüchen.

### Gegenstand der Erfindung

Im Rahmen der Erfindung wurde ein Bremssystem mit einer Einrichtung zur Ermittlung der auf ein Fahrzeug wirkenden Bremskraft, also mit einer Art Bremskraftschätzer entwickelt. Dieser umfasst Mittel zur Erfassung von Beschleunigungskomponenten.

Erfindungsgemäß können zusätzlich Mittel zur Erfassung der auf das Fahrzeug wirkenden Längsverzögerung sowie der Hangabtriebskraft vorgesehen werden. Zusätzlich ist eine Auswerteeinheit vorgesehen, die die Bremskraft auf Basis der Fahrzeuglängsverzögerung und der Hangabtriebskraft ermittelt.

Die Fahrzeuglängsverzögerung ist die kinematische Verzögerung entlang der Fahrzeuglängsachse. Die Fahrzeuglängsachse ist immer parallel zum Fahrweg, d.h. beim Übergang in eine Steigung oder in ein Gefälle neigt sie sich mit dem Fahrweg.

Die Hangabtriebskraft ist diejenige Kraft, die bei einer Neigung des Fahrwegs aus der Ebene heraus (Steigung oder Gefälle) in Fahrtrichtung auf das Fahrzeug wirkt. Die senkrecht nach unten gerichtete Gewichtskraft des Fahrzeugs im Schwerefeld der Erde lässt sich als Vektorsumme aus dieser Hangabtriebskraft und einer zum Fahrweg senkrechten, vom Fahrzeug auf den Fahrweg übertragenen Normalkraft.

Es wurde erkannt, dass die Hangabtriebskraft eine Größe ist, die einen wesentlichen Einfluss auf die Dynamik von Bremsvorgängen hat und die sich zugleich im Verlauf des Fahrwegs permanent ändert. Die im Schienenfahrzeugbereich üblichen Steigungen können z.B. in Deutschland für den Hochgeschwindigkeitsverkehr 40 Promille betragen, für Nebenverkehrsstrecken sogar darüber. In Steigungen ist die Hangabtriebskraft der Fahrtrichtung entgegengesetzt und unterstützt die Bremswirkung; in Gefällen verläuft die Hangabtriebskraft in Fahrtrichtung und konterkariert die Bremswirkung. Die Berücksichtigung der Hangabtriebskraft ist daher erforderlich, um mit hinreichender Genauigkeit aus der Fahrzeuglängsverzögerung auf die Bremskraft schließen zu können.

In der Verzögerungsregelung gemäß Stand der Technik wird die Wirkung der Hangabtriebskraft nicht separat berücksichtigt. Dies hat zur Folge, dass der Bremsweg immer gleich lang ist unabhängig davon, ob der Fahrweg in der Ebene, in der Steigung oder im Gefälle verläuft. In der Steigung wird daher die für die Bremswirkung günstige Hangabtriebskraft nachteilig neutralisiert, indem weniger stark gebremst wird. Umgekehrt wird im Gefälle die für die Bremswirkung nachteilige Hangabtriebskraft stillschweigend durch eine Mehrbeanspruchung der Bremse kompensiert.

Diese Probleme treten bei der erfindungsgemäßen Lösung nicht mehr auf. Die Bedienbarkeit der Bremse wird deutlich verbessert. Das Fahrzeug verhält sich in Steigung und Gefälle aus Sicht des Fahrers dahingehend intuitiv richtig, dass der Bremsweg in der Steigung kürzer und im Gefälle länger ist; hierauf sind in bestimmten Ländern und Märkten auch die Vorsignalabstände in der Infrastruktur von Schienenfahrzeugen ausgelegt. Die Bremssteuerung verhält sich insgesamt linearer, was für überlagerte Geschwindigkeitsregler vorteilhaft ist. Zugleich ist sichergestellt, dass auch bei hohen Verzögerungswerten die maximal zulässige Kraftschlussausnutzung nicht überschritten wird.

Vorteilhaft sind zwecks Erfassung der Hangabtriebskraft Mittel zur Erfassung der Längsneigung der Strecke am momentanen Ort des Schienenfahrzeugs vorgesehen. Insbesondere können die Mittel zur Erfassung der Beschleunigungskomponenten mit den Mitteln zur Erfassung der Hangabtriebskraft in einem gemeinsamen Bauteil integriert sein. Dieses Bauteil kann beispielsweise zwei orthogonal zueinander angeordnete Beschleunigungssensoren umfassen.

Im Rahmen der Erfindung wurde ein Bremssystem für ein Schienenfahrzeug entwickelt. Dieses umfasst einen Sollwertgeber für den Sollwert der Gesamt-Bremskraft, einen Regler zur Ermittlung mindestens eines Stellgrößenwerts auf der Basis dieses Sollwerts sowie mindestens ein Stellglied, das diesen Stellgrößenwert auf mindestens eine Bremseinrichtung überträgt.

Dabei kann der Sollwertgeber den Sollwert der Gesamt-Bremskraft unmittelbar vorgeben. Es kann aber auch beispielsweise eine geforderte Fahrzeuglängsverzögerung vorgegeben sein. Aus der Fahrzeuglängsverzögerung, der Fahrzeuggeschwindigkeit und der Fahrzeugmasse lässt sich die erforderliche Gesamt-Bremskraft ermitteln. Die Fahrzeuglängsverzögerung ist für den Fahrzeugführer, der das Fahrzeug zielgenau an einem vorgegebenen Punkt abbremsen muss, eine einsichtigere Größe als die Gesamt-Bremskraft.

Sind mehrere Bremseinrichtungen vorhanden, so ist vorteilhaft ein Bremskraftverteiler zur Einsteuerung der erforderlichen einzelnen Bremskräfte der verschiedenen Bremssysteme vorgesehen. Dieser Bremskraftverteiler kann dann insbesondere berücksichtigen, welche Bremseinrichtung in welchem Geschwindigkeits- oder Leistungsbereich am effektivsten oder in Bezug auf Verschleiß am kostengünstigsten wirkt. Es können dann insbesondere mehrere Stellglieder vorgesehen sein, die verschiedene Stellgrößenwerte auf verschiedene Bremseinrichtungen überträgt.

Erfindungsgemäß sind Mittel zur zumindest näherungsweisen Ermittlung von Beschleunigungskomponenten des Schienenfahrzeugs sowie Mittel zur Ermittlung des Istwerts der Gesamt-Bremskraft aus diesen Beschleunigungskomponenten unter Berücksichtigung der Fahrgeschwindigkeit und Fahrzeugmasse vorgesehen. Der Regler ist dazu ausgebildet, den Stellgrößenwert dahingehend zu beeinflussen, dass die Regelabweichung zwischen dem Sollwert und dem ermittelten Istwert vermindert wird. Dabei kann die Fahrzeugmasse fest vorgegeben sein, es können jedoch auch Mittel zur Erfassung der Masse des Schienenfahrzeugs vorgesehen sein, welche insbesondere in eine zwischen dem Wagenkasten und den Rädern des Fahrzeugs angeordnete Sekundärfederung integriert sein kann.

Durch die erfindungsgemäß vorgesehenen Maßnahmen, insbesondere bei Einsatz des Bremskraftschätzers, wird die Regelgüte für die Erreichung des vorgegebenen Sollwerts verbessert, d.h. der Sollwert wird schneller und genauer erreicht als nach dem bisherigen Stand der Technik. Hierfür werden vorteilhaft keine detaillierten Kenntnisse der eingesetzten Bremsen benötigt. Alle in der Wirkkette der Bremse zwischen der Sollwertvorgabe bis zur Entfaltung der Bremskraft enthaltenen Toleranzen und Ungenauigkeiten lassen sich ermitteln und ausregeln unabhängig davon, nach welcher Strategie die Bremskräfte auf die unterschiedlichen Bremsen aufgeteilt werden (Blending). Die Wiederholgenauigkeit der Bremswege sowie die Einhaltung vorgegebener Bremskräfte und daraus resultierender Verzögerungen sind gegenüber dem bisherigen Stand der Technik vorteilhaft erhöht.

In einer besonders vorteilhaften Ausgestaltung der Erfindung umfassen die Mittel zur Ermittlung von Beschleunigungskomponenten einen ersten Beschleunigungsgeber zur Ermittlung eines Messwerts. Alternativ oder auch in Kombination hierzu können diese Mittel auch dazu ausgebildet sein, die Längsverzögerung als zeitliche Ableitung der Fahrgeschwindigkeit zu ermitteln und diese Längsverzögerung um die Wirkung der Hangabtriebskraft zu bereinigen. Besonders vorteilhaft können die Mittel zur Ermittlung von Beschleunigungskomponenten eine zusätzliche Vergleichseinheit umfassen, die dazu ausgebildet ist, den Messwert und die um die Wirkung der Hangabtriebskraft bereinigte zeitliche Ableitung der Fahrgeschwindigkeit vor Ermittlung des Istwerts gegeneinander zu plausibilisieren.

In einer besonders vorteilhaften Ausgestaltung der Erfindung ist das Stellglied mit einem ohne Berücksichtigung des Istwerts der Bremskraft unmittelbar aus dem Sollwert für die Bremskraft ermittelten Stellgrößenwert vorgesteuert, und es überträgt eine Superposition dieses Stellgrößenwerts mit dem vom Regler ermittelten Stellgrößenwert auf mindestens eine Bremseinrichtung. Mit dieser Vorsteuerung kann die Bremskraft zumindest in die Nähe des Sollwerts gebracht werden, so dass der Regler nur noch eine Differenz ausregeln muss. Dies ist schneller und mit besserer Regelgüte möglich als ein Auffinden des optimalen Stellgrößenwerts ohne Vorsteuerung. Die Vorsteuerung verbessert die Regelgüte, indem Vorwissen über den Zusammenhang zwischen Stellgrößenwert und ausgeübter Bremskraft genutzt wird. Zusätzlich wird auch bei einem Ausfall des Reglers durch die Vorsteuerung eine bessere Sollwertvorgabe ermöglicht als z.B. das Einsteuern eines festen Defaultwertes.

Die Regelgüte kann in einer weiteren vorteilhaften Ausgestaltung der Erfindung, in der der Regler zusätzlich zum Istwert mindestens eine Umfeldgröße als Rückkopplung für die Regelung erhält, weiter verbessert werden. Solche Umfeldgrößen können beispielsweise die Temperatur oder Feuchtigkeit in der Umgebung des Schienenfahrzeugs sein. Beispielsweise kann bei gleichem Wert der an die Bremseinrichtung übertragenen Stellgröße die dadurch bewirkte Bremskraft von solchen Umgebungsbedingungen abhängen. Der Regler kann in diesem Zusammenhang insbesondere dazu ausgebildet sein, aus Wertereihen für den Istwert einerseits und der Umfeldgröße andererseits einen funktionalen Zusammenhang zwischen diesen beiden Größen zu ermitteln. Der Regler kann dann seine Regelgüte selbstlernend verbessern, beispielsweise mit Hilfe eines neuronalen Netzes.

In einer weiteren besonders vorteilhaften Ausgestaltung der Erfindung ist ein zweiter Beschleunigungsgeber zur Ermittlung der Hangabtriebskraft und/oder der Streckenlängsneigung vorgesehen, wobei die Messrichtungen beider Beschleunigungsgeber zueinander orthogonal sind. Der Einfluss der streckenneigungsabhängigen Hangabtriebskraft lässt sich dann besonders einfach von der Fahrzeuglängsverzögerung abseparieren. Ein in Fahrzeuglängsrichtung angeordneter erster Beschleunigungsgeber liefert systembedingt keine Signalkomponente, welche die der Längsneigung der Strecke entsprechende Hangabtriebskraft abbildet.

Weiterhin kann der Regler vorteilhaft eine oder mehrere der durch Luftwiderstand, Rollwiderstand und/oder sonstige Widerstände auf das Schienenfahrzeug (2) wirkenden Kräfte in die Ermittlung des Istwerts (F_{Br,est}) einbeziehen.

Die Regelung unter Rückkopplung des Istwerts kann für alle Bremsen vorgesehen sein. Sie kann aber auch nur für eine Teilmenge der wirksamen Bremsen vorgesehen sein. Der Regler steuert die restlichen Bremsen dann in Abhängigkeit vom Sollwert ohne Berücksichtigung des Istwerts an, und/oder er wirkt gar nicht auf diese Bremsen, sondern diese Bremsen werden lediglich über die Vorsteuerung unter Umgehung des Reglers angesteuert. Insbesondere die in Schienenfahrzeugen eingesetzten Bremssysteme haben stark unterschiedliche Übertragungsfunktionen, die die jeweilige Stellgröße auf die erzeugte Bremskraft abbilden. Die Regelgüte kann verbessert werden, wenn nur diejenigen Bremsen in die geschlossene Regelschleife einbezogen sind, deren Übertragungsfunktionen regelungstechnisch vorteilhaft sind. Insbesondere dürfen Änderungen in der Stellgröße durch den Regler keine bleibenden Schwingungen in der Regelschleife anregen. Vorteilhaft werden für die Regelung unter Rückkopplung des Istwerts daher diejenigen Bremsen herangezogen, deren Bremskraft linear vom Stellgrößenwert abhängt, mit dem sie angesteuert werden, und die eine möglichst kleine Anregelzeitkonstante aufweisen.

In einer weiteren vorteilhaften Ausgestaltung der Erfindung bezieht der Regler eine Vorgeschichte von Abweichungen zwischen Soll- und Istwert der Bremskraft bei früheren Bremsvorgängen in die Ermittlung des Stellgrößenwerts ein. So kann beispielsweise zur Optimierung des statischen Übertragungsverhaltens aus Abweichungen zwischen Ist- und Sollwert der Bremskraft eine additive Korrektur für die Stellgröße berechnet werden, mit der bei künftigen Bremsvorgängen der gewünschte stationäre Zustand der Bremskraft schneller und mit weniger Änderungen der Stellgröße eingeregelt werden kann. Das bedeutet, dass der Regler automatisch an die Regelstrecke angepasst wird und somit ein optimales Regelverhalten erzielt werden kann. Vorteilhaft werden während einer Änderung des Sollwerts und optional auch während der Reaktion der Stellgröße auf diese Änderung keine Abweichungen zwischen Ist- und Sollwert in die Vorgeschichte aufgenommen, um das dynamische Übertragungsverhalten der Bremssteuerung nicht zu beeinflussen.

Vorteilhaft kann die Rückkopplung des Istwerts im Regler die Bremskraft um einen in positive und/oder negative Richtung limitierten und einstellbaren Betrag erhöhen bzw. erniedrigen. Eine einfache Ausführungsform ist beispielsweise, den Rückkopplungswert in seinem Betrag nur um einen Wert ≥ 0 zu erhöhen, nicht jedoch zu erniedrigen. Auf diese Weise ist sichergestellt, dass zum Einen bei einem Ausfall oder Versagen der Rückkopplung keine gefährdende Verringerung der Bremskraft bzw. Verlängerung des Bremsweges eintreten kann und zum Anderen keine zu hohe Bremskraft angefordert wird, die die zulässigen Grenzen (Maximalkraft, Haftwertausnutzung u.a.) überschreitet. Zu diesem Zweck können beispielsweise der Teil des Reglers, der für die rudimentäre Steuerung des Stellgrößenwerts nur in Abhängigkeit des Sollwerts zuständig ist (open-loop ohne Rückkopplung), und der Teil des Reglers, der für die Verminderung der Regelabweichung zwischen Sollwert und Istwert verantwortlich ist (closed-loop mit Rückkopplung), als getrennte Baugruppen ausgeführt sein. Auch eine Vorsteuerung unter Umgehung des Reglers kann die Betriebssicherheit bei Ausfall des Reglers gewährleisten.

Um durch die Rückkopplung des Istwerts hervorgerufene unerwartete Nebeneffekte zu reduzieren, erfolgt diese Berücksichtigung vorteilhaft unter der Randbedingung, dass der Absolutwert der hierdurch bewirkten Änderung der Stellgröße auf einen vorgegebenen Wert begrenzt ist. Dieser Wert wird vorteilhaft nicht höher gewählt als es zur Korrektur der Variation des statischen Übertragungsverhaltens (Streckenverstärkung) der Regelschleife mindestens erforderlich ist.

Das Bremssystem ist zum Bremsen eines Schienenfahrzeugs ausgebildet. In einer besonders vorteilhaften Ausgestaltung der Erfindung umfasst es mindestens zwei verschiedene Bremsen aus der Gruppe Reibungsbremse, elektrodynamische Bremse, Magnetschienenbremse, Wirbelstrombremse, Retarder oder ähnliche. Jede dieser Bremsen hat ihre spezifischen Vorzüge, beispielsweise einen Geschwindigkeits- oder Leistungsbereich, in dem sie am effektivsten oder in Bezug auf Verschleiß am kostengünstigsten wirkt. Die geforderte Gesamtbremskraft wird unter Berücksichtigung dieser Kriterien aus den Beiträgen der vorhandenen Einzelbremsen zusammen gemischt (Blending).

In einer weiteren besonders vorteilhaften Ausgestaltung der Erfindung sind Mittel zur direkten oder indirekten Messung der Bremskraft jeder einzelnen Bremse vorgesehen. Zusätzlich ist ein Überwachungskreis vorgesehen, der die Summe dieser Bremskräfte mit dem vom Bremskraftschätzer gelieferten Istwert für die Bremskraft vergleicht. Aus diesem Vergleich kann dann vorteilhaft auf den Zustand der eingesetzten Bremsen geschlossen werden. Führt beispielsweise der Einsatz einer bestimmten Bremse zu einer außergewöhnlichen Abweichung der Summe der Einzelbremskräfte von dem vom Bremskraftschätzer gelieferten Istwert, so kann dies als Anzeichen dafür gewertet werden, dass diese Bremse defekt ist.

### Spezieller Beschreibungsteil

Nachfolgend wird der Gegenstand der Erfindung an Hand von Figuren erläutert, ohne dass der Gegenstand der Erfindung hierdurch beschränkt wird. Es ist gezeigt:
- Figur 1:: Schemazeichnung eines Fahrzeugs mit erfindungsgemäßem Bremssystem.
- Figur 2:: Vergleich zwischen Verzögerungsregelung nach Stand der Technik (a) und erfindungsgemäßer Bremskraftregelung (b).
- Figur 3:: Detailzeichnung des Signalflusses für die Bremskraftregelung.
- Figur 4:: Signalfluss in einem weiteren Ausführungsbeispiel der Erfindung.

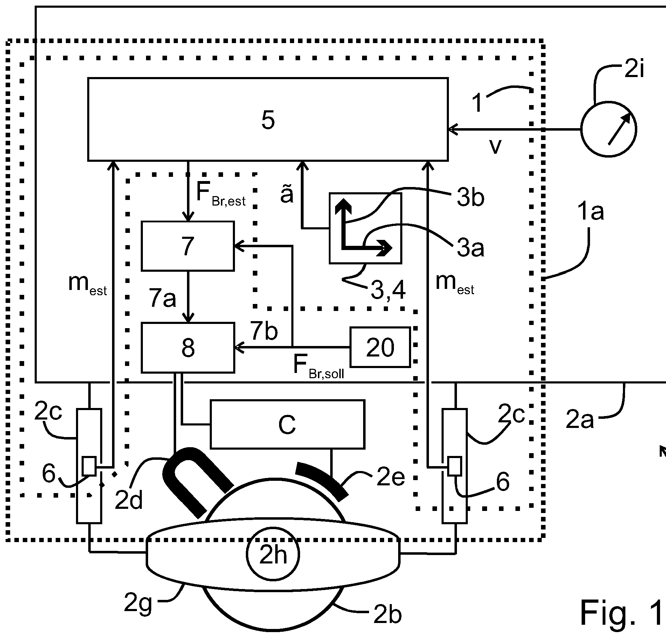

Figur 1 zeigt schematisch ein Schienenfahrzeug 2, das mit einem Bremssystem (1a) gemäß einem Ausführungsbeispiel der Erfindung ausgerüstet ist. Das Schienenfahrzeug 2 umfasst einen Wagenkasten 2a und fährt auf Rädern 2b, von denen der Übersichtlichkeit halber in Figur 1 nur eines dargestellt ist. Das Rad 2b ist über eine Radnabe 2h und eine Primärfederung an einem Drehgestell 2g gelagert. Das Drehgestell 2g ist über eine Sekundärfederung 2c mit dem Wagenkasten 2a verbunden.

Das Bremssystem 1a umfasst eine Reibungsbremse 2e mit einem Bremsschuh, der über einen Bremszylinder C gegen das Rad 2b gedrückt wird. Weiterhin ist eine Wirbelstrombremse 2d vorgesehen. Beide Bremsen werden über einen Bremskraftverteiler 8 angesteuert, der insoweit als Stellglied dient.

Der Sollwert F_{Br,soll} für die Gesamt-Bremskraft wird vom Sollwertgeber 20 vorgegeben, der beispielsweise ein Bedienelement im Führerstand des Schienenfahrzeugs 2 sein kann. Der Sollwert F_{Br,soll} wird zum Einen dem Bremskraftverteiler 8 unmittelbar als Vorsteuerungswert 7b für die Stellgröße zugeführt, mit der die Bremsen 2d und 2e zu beaufschlagen sind. Zum Anderen wird der Sollwert F_{Br,soll} auch dem Regler 7 zugeführt, der einen zusätzlichen Stellgrößenwert 7a generiert. Beide Stellgrößenwerte 7a und 7b werden im Bremskraftverteiler 8 miteinander verrechnet und an die Bremsen 2d und 2e ausgegeben.

Der Regler 7 erhält als Rückkopplung den geschätzten Istwert F_{Br,est} für die Gesamt-Bremskraft vom Bremskraftschätzer 1, der in das Bremssystem 1a integriert ist. Dieser Bremskraftschätzer 1 enthält einen kombinierten Beschleunigungssensor 3, 4, der sowohl eine erste Messrichtung 3a in Richtung der Fahrzeuglängsachse als auch eine hierzu orthogonale Messrichtung 3b aufweist. Die zusätzliche Messrichtung 3b macht den Sensor 3, 4 auf die Hangabtriebskraft sensitiv, so dass diese bei der Ermittlung der Beschleunigungskomponenten ã berücksichtigt werden kann. Die Beschleunigungskomponenten ã werden der Auswerteeinheit 5 zugeführt. Die Auswerteeinheit ist mit dem Tachometer 2i des Schienenfahrzeugs verbunden und erhält somit die Fahrgeschwindigkeit v als zusätzliche Eingabe. Weiterhin sind in der Sekundärfederung 2c Mittel 6 zur Ermittlung der Masse mₑₛₜ des Schienenfahrzeugs 2 angeordnet, die ebenfalls mit der Auswerteeinheit 5 verbunden sind. Die Auswerteeinheit 5 ermittelt aus den Beschleunigungskomponenten ã unter Berücksichtigung der Masse mₑₛₜ sowie der Fahrgeschwindigkeit v den geschätzten Istwert F_{Br,est} für die Gesamt-Bremskraft. Der Regler 7 ist dazu ausgebildet, einen optimalen Wert für die zusätzliche Stellgröße 7a dahingehend zu ermitteln, dass die Differenz zwischen dem Sollwert F_{Br,soll} und dem Istwert F_{Br,est} für die Gesamt-Bremskraft minimiert wird.

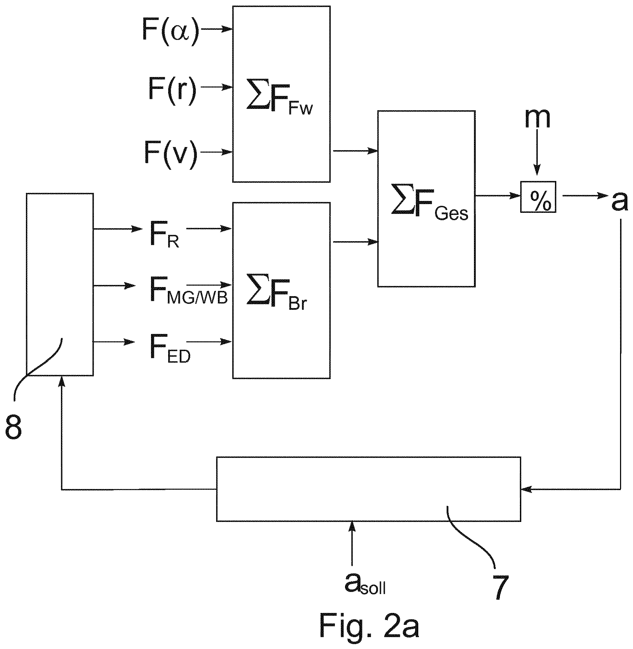

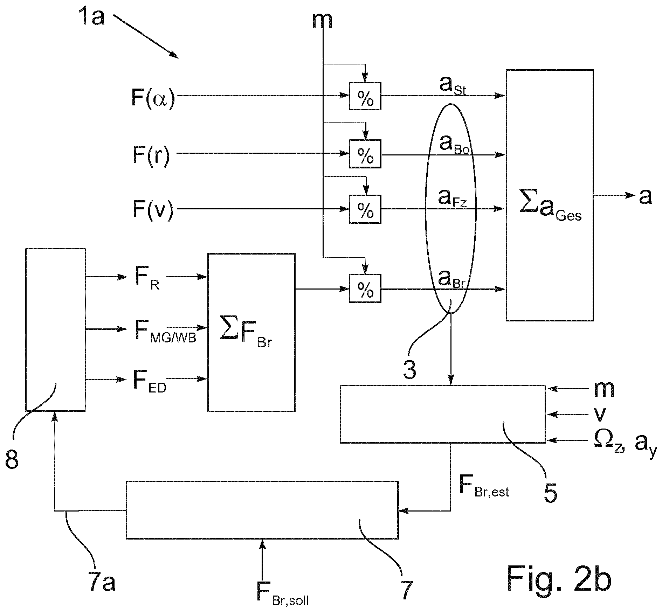

Figur 2 zeigt einen Vergleich zwischen der Verzögerungsregelung gemäß Stand der Technik (Figur 2a) und der erfindungsgemäßen Bremskraftregelung (Figur 2b) am Beispiel eines Schienenfahrzeugs. Auf das Fahrzeug wirken zum Einen Fahrwiderstandskräfte F_{Fw} und zum Anderen Bremskräfte F_{Br}. Die Fahrwiderstandskräfte gliedern sich in den Steigungswiderstand F(α), den Bogenwiderstand F(r) und weitere Fahrzeug- und Zugwiderstände F(v), wie Roll- oder aerodynamische Widerstände. Die Bremskräfte setzen sich zusammen aus der Komponente F_{R} einer Reibungsbremse, der Komponente F_{MG/WB} einer Magnetschienen- oder Wirbelstrombremse und der Komponente F_{ED} einer elektrodynamischen Bremse.

Im Modell der Verzögerungsregelung (Figur 2a) addieren sich alle Kräfte zu einer Gesamtkraft F_{ges}, aus der sich zusammen mit der Fahrzeugmasse m die resultierende kinematische Verzögerung a (dv/dt) ergibt. Ein Regler 7 erhält für diese Verzögerung sowohl den Istwert a als auch den Sollwert aₛₒₗₗ. Er gibt Stellgrößen an einen Bremskraftverteiler 8 aus dergestalt, dass der Istwert der Verzögerung mit dem Sollwert in Übereinstimmung gebracht wird. Eine Änderung des Steigungswiderstands durch den Wechsel in eine Steigung oder in ein Gefälle wird durch den Regler 7 kompensiert, mit den bereits beschriebenen nachteiligen Nebenwirkungen.

Im Modell der Bremskraftregelung (Figur 2b) gemäß einem Ausführungsbeispiel des erfindungsgemäßen Bremssystems (1a) führen Steigungswiderstand F(α), Bogenwiderstand F(r) sowie Fahrzeug- und Zugwiderstand F(v) zusammen mit der Fahrzeugmasse m jeweils zu Beschleunigungskomponenten a_{St}, a_{Bo} und a_{Fz}. Analog führt die Summe aller Bremskräfte F_{Br} zu einer Verzögerung a_{Br}. Alle wirksamen Beschleunigungskomponenten a_{St}, a_{Bo}, a_{Fz} und a_{Br} addieren sich zu einer Gesamtverzögerung a_{ges}=a. Der in Fahrtrichtung wirksame Sensor 3 für die Fahrzeuglängsverzögerung, der Teil des erfindungsgemäßen Bremskraftschätzers 1 ist, liefert nur die Summe aus den Verzögerungskomponenten a_{Bo}, a_{Fz} und a_{Br}; die Steigungsverzögerung a_{St} wird im allgemeinen Fall vom Sensor 3 nicht erfasst. Die registrierten Verzögerungskomponenten werden der Auswerteeinheit 5 des Bremskraftschätzers übergeben, die zusätzlich die Fahrzeugmasse m, die aktuelle Fahrgeschwindigkeit v sowie die Gierrate (Drehrate um die Vertikalachse) Ω_{z} und die Querbeschleunigung a_{y} als Eingaben erhält. Die Auswerteeinheit 5 errechnet hieraus die geschätzte Bremskraft F_{Br,est}. Diese wird zusammen mit einem Sollwert F_{Br,soll} dem Regler 7 zugeführt. Der Regler 7 stellt durch Anpassung der Stellgröße 7a die Bremskräfte so ein, dass der von der Auswerteeinheit 5 gelieferte Istwert F_{Br,est} für die Bremskraft mit dem Sollwert F_{Br,soll} in Übereinstimmung gebracht wird.

Eine geländebedingte Änderung des Steigungswiderstands bleibt in dieser Regelschleife außen vor. Damit verhält sich das Fahrzeug dahingehend intuitiv richtig, dass ohne weiteres Zutun der Bremsweg in der Steigung kürzer und im Gefälle länger wird. Dies kann vom Fahrzeugführer (oder einer weiteren Regelschleife) durch eine Anpassung des Sollwerts F_{Br,soll} für die Bremskraft kompensiert werden.

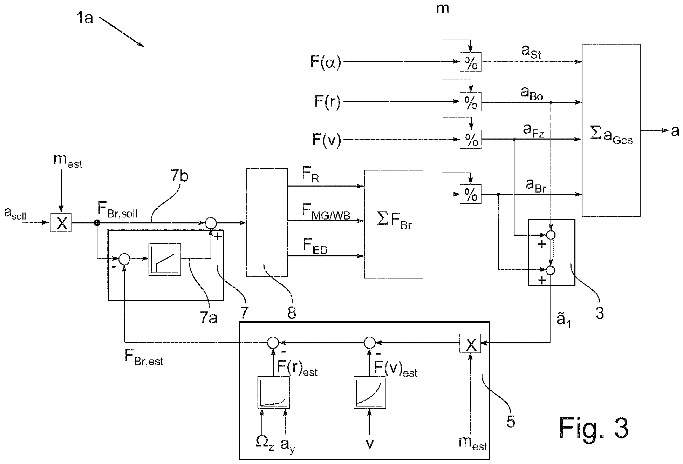

Figur 3 zeigt eine Detailzeichnung des Signalflusses für die Bremskraftregelung. Sie basiert auf der Figur 2b. Gegenüber Figur 2b sind die Details der Auswerteeinheit 5 erläutert. Die Auswerteeinheit 5 erhält die vom Sensor 3 gelieferte Summe ã₁= ãₘₑₛₛ der Verzögerungskomponenten a_{Bo}, a_{Fz} und a_{Br}. Division durch die Fahrzeugmasse m liefert die Gesamtkraft, die die Ursache der Verzögerung ä war. Aus der Fahrgeschwindigkeit v wird nun ein Schätzwert F(v)ₑₛₜ für den Fahrzeug- und Zugwiderstand gebildet und von der Gesamtkraft abgezogen. Danach wird aus der Gierrate (Drehrate um die Vertikalachse) Ω_{z} und der Querbeschleunigung a_{y} ein Schätzwert F(r)ₑₛₜ für den Bogenwiderstand gebildet und ebenfalls in Abzug gebracht. Das von der Auswerteeinheit 5 gelieferte Endergebnis ist ein Schätzwert F_{Br,est} für die Bremskraft. Dieser Schätzwert wird dem Regler 7 als Istwert für die Bremskraft zugeführt. Der Regler 7 korrigiert auf der Basis der Differenz zwischen diesem Istwert F_{Br,est} und dem Sollwert F_{Br,soll} die Stellgrößenwerte 7a, mit denen die eingesetzten Bremsen beaufschlagt werden mit dem Ziel, den Istwert F_{Br,est} mit dem Sollwert F_{Br,soll} in Übereinstimmung zu bringen.

Der Bremskraftverteiler 8, der die einzelnen Bremsen ansteuert und insoweit als Stellglied dient, wird in diesem Ausführungsbeispiel mit einem aus der Sollverzögerung aₛₒₗₗ und der Fahrzeugmasse mₑₛₜ statisch ermittelten Stellgrößenwert 7b vorgesteuert. Der durch den Regler ermittelte Stellgrößenwert 7a ist ein dynamischer Korrekturwert, der zu diesem statisch ermittelten Wert 7b addiert wird. Hierhinter steckt die Überlegung, dass die statische Vorsteuerung die Bremskraft zumindest in die Nähe des Sollwerts F_{Br,soll} bringt. Der Regler 7 muss dann nur noch die Differenz ausregeln. Die Regelgüte wird hierdurch verbessert.

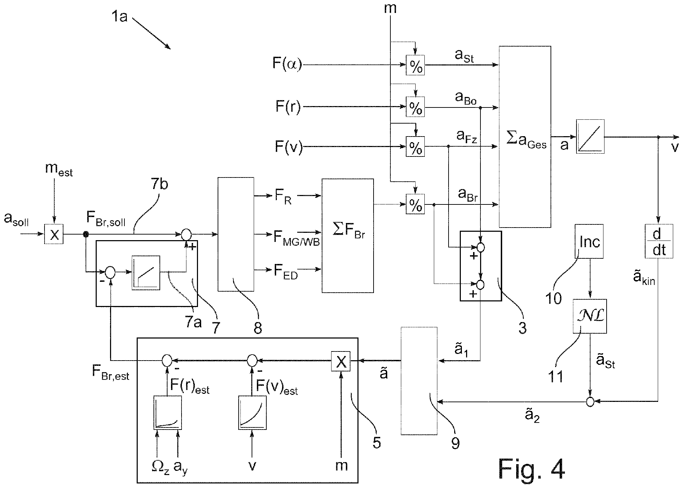

Figur 4 zeigt den Signalfluss in einem weiteren Ausführungsbeispiel der Erfindung. Im Unterschied zu Figur 3 wird hier zusätzlich eine zeitliche Ableitung der Fahrgeschwindigkeit v als Beschleunigungskomponente ãₖᵢₙ ermittelt. Über eine Sensorik (10) und Auswertung (11) wird parallel hierzu die Beschleunigungskomponente ã_{St} ermittelt, die auf die Hangabtriebskraft zurückgeht. Die als Ableitung der Fahrgeschwindigkeit v ermittelte Längsverzögerung ãₖᵢₙ wird um die auf die Hangabtriebskraft zurückgehende Beschleunigungskomponente ã_{St} bereinigt. Das Ergebnis wird als Beschleunigungswert ã₂ der Vergleichseinheit 9 zugeführt. Diese Vergleichseinheit 9 erhält auch den Beschleunigungswert ã₁= ã_{mess,} in dem die Komponenten a_{Bo}, a_{Fz} und a_{Br} zusammengefasst sind. Nach Plausibilisierung der beiden Beschleunigungswerte ã₁ und ã₂ wird ein hieraus zusammengefasster Wert ã, beispielsweise ein Mittelwert, an die Auswerteeinheit 5 weitergeleitet.

### Bezugszeichenliste

- 1: Bremskraftschätzer
- 1a: Bremssystem
- 2: Schienenfahrzeug
- 2a: Wagenkasten des Schienenfahrzeugs 2
- 2b: Rad des Schienenfahrzeugs 2
- 2c: Sekundärfederung zwischen Drehgestell 2g und Wagenkasten 2a
- 2d: Wirbelstrombremse
- 2e: Reibungsbremse
- 2g: Drehgestell
- 2h: Radnabe
- 2i: Tachometer
- 3: Beschleunigungsgeber
- 3a, 3b: Messrichtungen des Beschleunigungsgebers 3
- 4: Mittel zur Bestimmung der Hangabtriebskraft
- 5: Auswerteeinheit des Bremskraftschätzers 1
- 6: Sensor zur Bestimmung der Fahrzeugmasse mₑₛₜ
- 7: Regler
- 7a: vom Regler 7 generierter Stellgrößenwert
- 7b: aus Sollwert F_{Br,soll} ermittelter Vorsteuerungswert für die Stellgröße
- 8: Bremskraftverteiler als Stellglied
- 9: Vergleichseinheit
- 10, 11: Bereinigung der kinematischen Verzögerung ãₖᵢₙ um die Hangabtriebskraft
- 20: Sollwertgeber
- ã, ã₁, ã₂: Beschleunigungskomponenten
- ãₖᵢₙ: zeitliche Ableitung der Fahrgeschwindigkeit v
- ãₘₑₛₛ: Messwert des Beschleunigungsgebers 3, 4
- F_{Br,est}: geschätzter Istwert für die Gesamt-Bremskraft
- F_{Br,soll}: Sollwert für die Gesamt-Bremskraft
- m: Fahrzeugmasse
- mₑₛₜ: geschätzter Wert für die Fahrzeugmasse m
- v: Fahrgeschwindigkeit

## Patentansprüche

1. Bremssystem (1a) für ein Schienenfahrzeug (2), umfassend einen Sollwertgeber (20) für den Sollwert (F_{Br,soll}) der Gesamt-Bremskraft, einen Regler (7) zur Ermittlung mindestens eines Stellgrößenwerts (7a) auf der Basis dieses Sollwerts (F_{Br,soll}) sowie mindestens ein Stellglied (8), das diesen Stellgrößenwert (7a) auf mindestens eine Bremseinrichtung (2d, 2e) überträgt,
**dadurch gekennzeichnet, dass**
Mittel (3, 3a, 3b, 4) zur zumindest näherungsweisen Ermittlung von Beschleunigungskomponenten (ä) des Schienenfahrzeugs (2) sowie Mittel (1,5) zur Ermittlung des Istwerts (F_{Br,est}) der Gesamt-Bremskraft aus diesen Beschleunigungskomponenten (ä) unter Berücksichtigung der Fahrgeschwindigkeit (v) und Fahrzeugmasse (m, mₑₛₜ) vorgesehen sind, und dass der Regler (7) dazu ausgebildet ist, den Stellgrößenwert (7a) daraufhin zu regeln, dass die Regelabweichung zwischen dem Sollwert (F_{Br,soll}) und dem ermittelten Istwert (F_{Br,est}) vermindert wird, wobei die Mittel (3) zur Ermittlung von Beschleunigungskomponenten (ä) einen ersten Beschleunigungsgeber (3, 4, 3a) zur Ermittlung eines Messwerts (ãₘₑₛₛ) umfassen, und die Mittel (3, 3a, 3b, 4) zur Ermittlung von Beschleunigungskomponenten (ä) dazu ausgebildet sind, die Längsverzögerung (ãₖᵢₙ) des Schienenfahrzeugs (2) als zeitliche Ableitung der Fahrgeschwindigkeit (v) zu ermitteln und um die Wirkung der Hangabtriebskraft zu bereinigen (10, 11), wobei die Mittel (1,5) zur Ermittlung des Istwerts (F_{Br,est}) eine Vergleichseinheit (9) umfassen, die dazu ausgebildet ist, den Messwert (ãₘₑₛₛ) und die um die Wirkung der Hangabtriebskraft bereinigte zeitliche Ableitung (ãₖᵢₙ) der Fahrgeschwindigkeit (v) vor Ermittlung des Istwerts (F_{Br,est}) gegeneinander zu plausibilisieren.

2. Bremssystem (1a) nach Anspruch 1, **dadurch gekennzeichnet, dass** das Stellglied (8) mit einem ohne Berücksichtigung des Istwerts (F_{Br,est}) unmittelbar aus dem Sollwert (F_{Br,soll}) ermittelten Stellgrößenwert (7b) vorgesteuert ist und eine Superposition dieses Stellgrößenwerts (7b) mit dem vom Regler (7) ermittelten Stellgrößenwert (7a) auf mindestens eine Bremseinrichtung (2d, 2e) überträgt.

3. Bremssystem (1a) nach einem der Ansprüche 1 bis 2, **dadurch gekennzeichnet, dass** der Regler (7) zusätzlich zum Istwert (F_{Br,est}) mindestens eine Umfeldgröße als Rückkopplung für die Regelung erhält.

4. Bremssystem (1a) nach Anspruch 3, **dadurch gekennzeichnet, dass** der Regler (7) dazu ausgebildet ist, aus Wertereihen für den Istwert (F_{Br,est}) einerseits und der Umfeldgröße andererseits einen funktionalen Zusammenhang zwischen diesen beiden Größen zu ermitteln.

5. Bremssystem (la) nach einem der Ansprüche 1 bis 4, **dadurch gekennzeichnet, dass** ein zweiter Beschleunigungsgeber (3, 4, 3b) zur Ermittlung der Hangabtriebskraft und/oder der Streckenlängsneigung vorgesehen ist, wobei die Messrichtungen (3a, 3b) beider Beschleunigungsgeber (3, 4, 3a, 3b) zueinander orthogonal sind.

6. Bremssystem (1a) nach einem der Ansprüche 1 bis 5, **dadurch gekennzeichnet, dass** die Regelung unter Rückkopplung des Istwerts (F_{Br,est}) nur für eine Teilmenge der wirksamen Bremsen (2d, 2e) vorgesehen ist.

7. Bremssystem (1a) nach einem der Ansprüche 1 bis 6, **gekennzeichnet durch** einen Regler (7), der eine Vorgeschichte von Abweichungen zwischen Sollwert (F_{Br,soll}) und Istwert (F_{Br,est}) der Bremskraft bei früheren Bremsvorgängen in die Ermittlung des Stellgrößenwerts (7a) einbezieht.

8. Bremssystem (1a) nach einem der Ansprüche 1 bis 7, **dadurch gekennzeichnet, dass** die Rückkopplung des Istwerts (F_{Br,est}) im Regler (7) die Bremskraft um einen in positive und/oder negative Richtung limitierten und einstellbaren Betrag erhöhen bzw. erniedrigen kann.

9. Bremssystem (1a) nach Anspruch 1, **dadurch gekennzeichnet, dass** zusätzlich zu den Mitteln (1,5) zur Ermittlung des Istwerts (F_{Br,est}) der auf ein Schienenfahrzeug (2) wirkenden Bremskraft, und den Mitteln (3) zur Erfassung von Beschleunigungskomponenten (ã), insbesondere der Fahrzeuglängsverzögerung, außerdem Mittel (4) zur Erfassung der auf das Fahrzeug wirkenden Hangabtriebskraft vorgesehen sind, und dass eine Auswerteeinheit (5) vorgesehen ist, die die Bremskraft (F_{Br,est}) auf Basis der Fahrzeuglängsverzögerung und der Hangabtriebskraft ermittelt.

10. Bremssystem (1a) nach einem der vorhergehenden Ansprüche, **dadurch gekennzeichnet, dass** zwecks Erfassung der Hangabtriebskraft Mittel (4a) zur Erfassung der Längsneigung der Strecke am momentanen Ort des Schienenfahrzeugs (2) vorgesehen sind.

11. Bremssystem (1a) nach einem der vorhergehenden Ansprüche, **dadurch gekennzeichnet, dass** die Mittel (3) zur Erfassung der Fahrzeuglängsverzögerung mit den Mitteln (4) zur Erfassung der Hangabtriebskraft in einem gemeinsamen Bauteil (3, 4) integriert sind.

12. Bremssystem (1a) nach einem der vorhergehenden Ansprüche, **dadurch gekennzeichnet, dass** die Mittel (1, 5) bzw. die Einrichtung (1) zur Ermittlung des Istwerts (F_{Br,est}) dazu ausgebildet sind, eine oder mehrere der durch Luftwiderstand, Rollwiderstand und/oder sonstige Widerstände auf das Schienenfahrzeug (2) wirkenden Kräfte in die Ermittlung des Istwerts (F_{Br,est}) einzubeziehen.

13. Bremssystem (1a) nach einem der vorhergehenden Ansprüche, **gekennzeichnet durch** Mittel (6) zur Erfassung der Masse des Schienenfahrzeugs (2).

14. Bremssystem (1a) nach Anspruch 13, **dadurch gekennzeichnet, dass** die Mittel (6) zur Erfassung der Masse in eine zwischen dem Wagenkasten (2a) und den Rädern (2b) des Schienenfahrzeugs (2) angeordnete Sekundärfederung (2c) integriert sind.

15. Bremssystem (1a) nach einem der vorhergehenden Ansprüche, **dadurch gekennzeichnet, dass** es mindestens zwei verschiedene Bremsen (2d, 2e) aus einer Gruppe, umfassend Reibungsbremse (2e), elektrodynamische Bremse, Magnetschienenbremse, Wirbelstrombremse (2d) und Retarder, aufweist.

16. Bremssystem (1a) nach einem der vorhergehenden Ansprüche, **dadurch gekennzeichnet, dass** Mittel zur direkten oder indirekten Messung der Bremskraft jeder einzelnen Bremse (2d, 2e) vorgesehen sind und dass ein Überwachungskreis vorgesehen ist, der die Summe dieser Bremskräfte mit dem von den Mitteln (1, 5) gelieferten Istwert (F_{Br,est}) für die Bremskraft vergleicht.

## Claims

1. Braking system (1a) for a rail vehicle (2), comprising a setpoint generator (20) for the setpoint (F_{Br,soll}) of the overall braking force, a controller (7) for determining at least one manipulated variable (7a) based on this setpoint (F_{Br,soll}), and at least one actuator (8) that transmits this manipulated variable (7a) to at least one braking device (2d, 2e),
**characterised in that**
means (3, 3a, 3b, 4) for at least approximately determining acceleration components (ã) of the rail vehicle (2) as well as means (1,5) for determining the actual value (F_{Br,est}) of the overall braking force from these acceleration components (ã) taking into account the running speed (v) and vehicle mass (m, mₑₛₜ) are provided, and **in that** the controller (7) is designed to control the manipulated variable (7a) to reduce the control deviation between the setpoint (F_{Br,soll}) and the determined actual value (F_{Br,est}), wherein the means (3) for determining acceleration components (ã) comprise a first accelerometer (3, 4, 3a) for determining a measured value (ãₘₑₛₛ) and the means (3, 3a, 3b, 4) for determining acceleration components (ã) are designed to determine the longitudinal deceleration (ãₖᵢₙ) of the rail vehicle (2) as a time derivative of the running speed (v) and to remove (10, 11) the effect of downhill force, wherein the means (1,5) for determining the actual value (F_{Br,est}) comprises a comparison unit (9) designed to make plausible the measured value (ãₘₑₛₛ) and the time derivative (ãₖᵢₙ) of the running speed (v) with the effect of downhill force removed relative to each other before determining the actual value (F_{Br,est}).

2. Braking system (1a) according to claim 1, **characterised in that** the actuator (8) is pilot-controlled with a manipulated variable (7b) determined directly from the setpoint (F_{Br,soll}) without taking into account the actual value (F_{Br,est}), and transmits a superposition of this manipulated variable (7b) with the manipulated variable (7a) determined by the controller (7) to at least one braking device (2d, 2e).

3. Braking system (1a) according to any of claims 1 to 2, **characterised in that** the controller (7) receives at least one environmental variable as feedback for the controlling in addition to the actual value (F_{Br,est}).

4. Braking system (1a) according to any of claims 1 to 3, **characterised in that** the controller (7) is configured to determine, from a series of values for the actual value (F_{Br,est}) on the one hand and the environmental variable on the other hand, a functional relationship between these two variables.

5. Braking system (1a) according to any of claims 1 to 4, **characterised in that** a second accelerometer (3, 4, 3b) is provided for determining the downhill force and/or the line longitudinal gradient, wherein the measuring devices (3a, 3b) of both accelerometers (3, 4, 3a, 3b) are orthogonal to each other.

6. Braking system (1a) according to any of claims 1 to 5, **characterised in that** the control with feedback of the actual value (F_{Br,est}) is provided only for a subset of the effective brakes (2d, 2e).

7. Braking system (1a) according to any of claims 1 to 6, **characterised by** a controller (7) that takes into account a prior history of deviations between the setpoint (F_{Br,soll}) and actual value (F_{Br,est}) of the braking force from previous braking procedures when determining the manipulated variable (7a).

8. Braking system (1a) according to any of claims 1 to 7, **characterised in that** the feedback of the actual value (F_{Br,est}) to the controller (7) can increase or lower the braking force by an amount limited and adjustable in the positive and/or negative direction.

9. Braking system (1a) according to claim 1, **characterised in that,** in addition to the means (1,5) for determining the actual value (F_{Br,est}) of the overall braking force acting on a rail vehicle (2) and the means (3) for determining acceleration components (ã), particular the longitudinal deceleration of the vehicle, means (4) are provided for detecting the downhill force acting on the vehicle, and **in that** an evaluation unit (5) is provided that determines the braking force (F_{Br,est}) based on the longitudinal deceleration of the vehicle and the downhill force.

10. Braking system (1a) according to any of the preceding claims, **characterised in that** means (4a) for detecting the longitudinal gradient of the route at the given location of the rail vehicle (2) are provided to detect the downhill force.

11. Braking system (1a) according to any of the preceding claims, **characterised in that** the means (3) for detecting the vehicle longitudinal deceleration are integrated in a common component (3, 4) with the means (4) for detecting the downhill force.

12. Braking system (1a) according to any of the preceding claims, **characterised in that** the means (1,5) and/or the device (1) for determining the actual value (F_{Br,est}) are designed to take into account one or more of the forces acting on the rail vehicle (2) that result from air resistance, rolling resistance and/or other resistances when determining the actual value (F_{Br,est}).

13. Braking system (1a) according to any of the preceding claims, **characterised by** means (6) for detecting the mass of the rail vehicle (2).

14. Braking system (1a) according to claim 1, **characterised in that** the means (6) for detecting the mass are integrated in a secondary suspension (2c) arranged between the body (2a) and the wheels (2b) of the rail vehicle (2).

15. Braking system (1a) according to any of the preceding claims, **characterised in that** it comprises at least two different brakes (2d, 2e) from a group comprising friction brake (2e), electrodynamic brake, electromagnetic rail brake, eddy current brake (2d) and retarder.

16. Braking system (1a) according to any of the preceding claims, **characterised in that** means for directly or indirectly measuring the braking force of each individual brake (2d, 2e) are provided, and **in that** a monitoring circuit is provided that compares the sum of these braking forces to the actual value (F_{Br,est}) for the breaking force supplied by the means (1, 5).

## Revendications

1. Système (1a) de frein d'un véhicule (2) ferroviaire, comprenant un émetteur (20) de la valeur (F_{Br,soll}) de consigne de la force de freinage totale, un régleur (7) de détermination d'au moins une valeur (7a) de grandeur de réglage, sur la base de cette valeur (F_{Br,soll}) de consigne, ainsi qu'au moins un élément (8) de réglage, qui transmet cette valeur (7a) de grandeur de réglage à au moins un dispositif (2d, 2e) de frein,
**caractérisé en ce qu'**
il est prévu des moyens (3, 3a, 3b, 4) de détermination, au moins approximative, de composantes (ã) d'accélération du véhicule (2) ferroviaire, ainsi que des moyens (1, 5) de détermination de la valeur (F_{Br,est}) réelle de la force de freinage totale, à partir de ses composantes (ã) d'accélération, en tenant compte de la vitesse (v) de marche et de la masse (m, mₑₛₜ) du véhicule, et **en ce que** le régleur (7) est constitué pour régler la valeur (7a) de grandeur de réglage, de manière à diminuer l'écart de réglage entre la valeur (F_{Br,soll}) de consigne et la valeur (F_{Br,est}) réelle déterminée, les moyens (3) de détermination de composantes (ã) d'accélération comprenant un premier indicateur (3, 4, 3a) d'accélération pour déterminer une valeur (ãₘₑₛₛ) de mesure et les moyens (3, 3a, 3b, 4) de détermination de composantes (ã) d'accélération étant constitués pour déterminer la décélération (ãₖᵢₙ) longitudinale du véhicule (2) ferroviaire, sous la forme de la dérivée en fonction du temps de la vitesse (v) de marche et pour purger (10, 11) l'effet de la force descensionnelle de pente, les moyens (1, 5) de détermination de la valeur (F_{Br,est}) réelle comprenant une unité (9) de comparaison constituée pour rendre plausible, avant la détermination de la valeur (F_{Br,est}) réelle, la valeur (ãₘₑₛₛ) de mesure et la dérivée (ãₖᵢₙ) en fonction du temps, purgée de l'effet de la force descensionnelle de pente, de la vitesse (v) de marche.

2. Système (1a) de frein suivant la revendication 1, **caractérisé en ce que** l'élément (8) de réglage est piloté par une valeur (7b) de grandeur de réglage, déterminée directement à partir de la valeur (F_{Br,soll}) de consigne, sans prendre en compte la valeur (F_{Br,est}) réelle, et une superposition de cette valeur (7b) de grandeur de réglage à la valeur (7a) de grandeur de réglage déterminée par le régleur (7) est transmise à au moins un dispositif (2d, 2e) de frein.

3. Système (1a) de frein suivant l'une des revendications 1 à 2, **caractérisé en ce que** le régleur (7) reçoit, supplémentairement à la valeur (F_{Br,est}) réelle, au moins une grandeur périphérique, comme réaction pour la régulation.

4. Système (1a) de frein suivant la revendication 3, **caractérisé en ce que** le régleur (7) est constitué pour déterminer, à partir de séries de valeurs de la valeur (F_{Br,est}) réelle d'une part et de la grandeur périphérique d'autre part, une relation fonctionnelle entre ces deux grandeurs.

5. Système (1a) de frein suivant l'une des revendications 1 à 4, **caractérisé en ce qu'**il est prévu un deuxième indicateur (3, 4, 3b) d'accélération pour déterminer la force descensionnelle de pente et/ou l'inclinaison en longueur de voie, les dispositifs (3a, 3b) de mesure des deux indicateurs (3, 4, 3a, 3b) d'accélération étant orthogonaux entre eux.

6. Système (1a) de frein suivant l'une des revendications 1 à 5, **caractérisé en ce que** la régulation et la réaction de la valeur (F_{Br,est}) n'est prévue que pour un ensemble partiel des freins (2d, 2e) efficaces.

7. Système (1a) de frein suivant l'une des revendications 1 à 6, **caractérisé par** un régleur (7), qui incorpore, dans la détermination de la valeur (7a) de grandeur de réglage, une histoire antérieure des écarts entre valeur (F_{Br,soll)} de consigne et valeur (F_{Br,est}) réelle de la force de freinage dans des opérations antérieures de freinage.

8. Système (1a) de frein suivant l'une des revendications 1 à 7, **caractérisé en ce que** la réaction de la valeur (F_{Br,est}) réelle dans le régleur (7) augmente ou diminue la force de freinage d'un montant limité et réglable dans le sens positif et/ou négatif.

9. Système (1a) de frein suivant la revendication 1, **caractérisé en ce qu'**en plus des moyens (1, 5) de détermination de la valeur (F_{Br,est}) réelle de la force de freinage appliquée au véhicule (2) ferroviaire et des moyens (3) de détection de composantes (ã) d'accélération, notamment de la décélération longitudinale du véhicule, sont prévus, en outre, des moyens (4) de détection de la force descensionnelle de pente s'appliquant au véhicule et **en ce qu'**il est prévu une unité (5) d'exploitation, qui détermine la force (F_{Br,est}) de freinage sur la base de la décélération longitudinale du véhicule et de la force descensionnelle de pente.

10. Système (1a) de frein suivant l'une des revendications précédentes, **caractérisé en ce qu'**en vue de détecter la force descensionnelle de pente, il est prévu des moyens (4a) de détection de l'inclinaison longitudinale de la voie à l'emplacement instantané du véhicule (2) ferroviaire.

11. Système (1a) de frein suivant l'une des revendications précédentes, **caractérisé en ce que** les moyens (3) de détection de la décélération longitudinale du véhicule, avec les moyens (4) de détection de la force descensionnelle de pente, sont intégrés en un élément (3, 4) constitutif commun.

12. Système (1a) de frein suivant l'une des revendications précédentes, **caractérisé en ce que** les moyens (1, 5) ou le dispositif (1) de détermination de la valeur (Far,est) réelle sont constitués pour incorporer, dans la détermination de la valeur (F_{Br,est}) réelle, une ou plusieurs des forces s'appliquant au véhicule (2) ferroviaire par la résistance de l'air, la résistance de roulement et/ou d'autres résistances.

13. Système (1a) de frein suivant l'une des revendications précédentes, **caractérisé par** des moyens (6) de détermination de la masse du véhicule (2) ferroviaire.

14. Système (1a) de frein suivant la revendication 13, **caractérisé en ce que** les moyens (6) de détection de la masse sont intégrés dans une suspension (2c) secondaire, disposée entre la caisse (2a) et les roues (2b) du véhicule (2) ferroviaire.

15. Système (1a) de frein suivant l'une des revendications précédentes, **caractérisé en ce qu'**il a au moins deux freins (2d, 2e) différents, choisis dans le groupe comprenant des freins (2e) de friction, des freins électrodynamiques, des freins électromagnétiques à patins sur rail, des freins (2d) à courant de Foucault et des freins de voie.

16. Système (1a) de frein suivant l'une des revendications précédentes, **caractérisé en ce qu'**il est prévu des moyens de mesure directs ou indirects de la force de freinage de chaque frein (2d, 2e) individuel et **en ce qu'**il est prévu un circuit de contrôle, qui compare la force de ses forces de freinage à la valeur (F_{Br,est}), fournie par les moyens (1, 5), de la force de freinage.
